# EUROPÄISCHE PATENTSCHRIFT

(11) **EP 2 374 520 B1**
(45) Veröffentlichungstag und Bekanntmachung des Hinweises auf die Patenterteilung: **27.03.2013**
(21) Anmeldenummer: 11157579.1
(22) Anmeldetag: 10.03.2011
(51) Int. Cl.: B01D 46/02

(54) **Verwendung eines Spannbandes in einer Filtervorrichtung**
Use of a clamping band in a filter device
Utilisation d'une bande de serrage dans un dispositif de filtre

(30) Priorität: 29.03.2010 DE 202010004221 U
(43) Veröffentlichungstag der Anmeldung: 12.10.2011
(73) Patentinhaber: Heimbach GmbH & Co. KG, 52353 Düren (DE)
(72) Erfinder: Geue, Axel, 52353 Düren (DE); Schulz, Peter, 47877 Willich (DE)
(74) Vertreter: Albrecht, Ralf

(56) Entgegenhaltungen:
- DE-A1- 2 551 866
- DE-U1- 8 003 027
- US-A- 4 310 336
- US-A- 5 746 792
- US-B1- 6 726 735

## Beschreibung

Die Erfindung betrifft die Verwendung eines Spannbandes in einer Filtervorrichtung mit einem dessen Innenraum in einen Reingasraum und einen Rohgasraum unterteilenden Trennboden, der zumindest eine einen Öffnungsrand ausbildende Öffnung aufweist, in die jeweils ein Filterschlauch eingesetzt ist, der einen Befestigungskopf an dessen oberem offenen Ende aufweist, welcher außenseitig zwei radial vorstehende Verdickungen in Form von Wulstringen mit davon eingeschlossener Ringnut aufweist, in die der Öffnungsrand der zugehörigen Öffnung einfasst, sowie auf die Verwendung des Spannbandes in einem Filterschlauch für diese Filtervorrichtung. Sie betrifft ferner ein Verfahren zur Reparatur einer solchen Filtervorrichtung.

In industriellen Entstaubungsanlagen werden häufig Filtervorrichtungen eingesetzt, deren Innenraum durch einen in der Regel horizontalen Trennboden in einen Rohgasraum und einen Reingasraum aufgeteilt ist. Der Rohgasraum weist einen Einlass für das zu reinigende Gas auf, während der Reingasraum einen Auslass für das gereinigte Gas hat. In den meisten Fällen befindet sich der Reingasraum oberhalb des Rohgasraums (vgl. EP 1 677 894 B1). Aber auch eine umgekehrte Anordnung ist möglich (vgl. DE 22 18 461 B).

Der Trennboden weist meist mehrere oder eine Vielzahl von Öffnungen mit in der Regel kreisrunden oder ovalen Öffnungsrändern auf. In die Öffnungen sind langgestreckte, im Querschnitt an die Öffnungsränder angepasste Filterschläuche eingesetzt, die sich in den Rohgasraum hinein erstrecken. Von innen werden die Filterschläuche jeweils durch einen Stützkorb abgestützt, der der Aufrechterhaltung der Schlauchform im Betrieb dient.

Der Filterschlauch ist in der zugehörigen Öffnung des Trennbodens über einen Befestigungskopf fixiert, der an dem offenen Ende des Filterschlauchs vorgesehen ist. Hierzu weist der Befestigungskopf außenseitig zwei radial vorstehende Verdickungen in Form von Wulstringen auf, die zwischen sich eine Ringnut ausbilden. In diese Ringnut fasst der Öffnungsrand der zugehörigen Öffnung ein, wobei die Wulstringe an dem Öffnungsrad oben- und untenseitig anliegen. Der Befestigungskopf kann dabei durch Umschlagen des Filterschlauchs um ein zwei Wulstringe ausbildendes Wulstband und anschließendes Vernähen des umgeschlagenen Abschnitts mit dem Filterschlauch oder durch Herstellen eines separaten Befestigungskopfes und anschließende Verbindung desselben mit dem Filterschlauch gebildet werden (vgl. Figur 1 und zugehörige Beschreibung von EP 0 529 225 B1).

Damit der Befestigungskopf unter Betriebsbedingungen nicht aus der zugehörigen Öffnung herausrutschen kann, ist bei den bekannten Filterschläuchen dieser Art in den Befestigungskopf ein Spannband - fachsprachlich auch Snap-Ring genannt - eingelassen, das in der Regel aus einem Federstahlband besteht und sich über den Umfang des Befestigungskopfs erstreckt (vgl. DE 22 18 461 B, EP 0 529 225 B1). Der Durchmesser des Spannbandes ist so dimensioniert, dass es eine radial nach außen gegen den Öffnungsrand gerichtete Spannkraft erzeugt, die den Befestigungskopf gegen den Öffnungsrand presst. Die Spannkraft ist so bemessen, dass sie ausreichend ist, den Filterschlauch ohne jede zusätzliche Unterstützung betriebssicher zu fixieren, d.h. ein Herausrutschen des Filterschlauchs unter den auslegungsgemäßen Betriebsbedingungen der Filtervorrichtung zu vermeiden.

Auch in der DE 25 51 866 A1 und der US 5, 746, 792 A sind Filtervorrichtungen offenbart, bei denen in dem Befestigungskopf des Filterschlauchs ein Spannband eingelassen ist, welches eine radial nach außen gegen den Öffnungsrand gerichtete Spannkraft erzeugt und somit den Befestigungskopf gegen den Öffnungsrand presst. Bei diesen Filtervorrichtungen sind jedoch in die Filterschläuche von oben hineinragende, starre Stutzen eingesetzt, deren Außenumfang so bemessen ist, dass sie in dem Befestigungskopf eine Art Presssitz erzeugen mit der Folge, dass der Befestigungskopf zusätzlich radial nach außen gegen den Öffnungsrand gepresst wird. Offensichtlich wird erst hierdurch eine betriebssichere Fixierung des Befestigungskopfes des Filterschlauchs an dem Trennboden erzeugt. Gegenüber den gattungsgemäßen Filtervorrichtungen (DE 22 18 461 B; EP 0 529 225 B1, Figur 1) ist diese Art der Befestigung der Filterschläuche am Trennboden sehr aufwändig.

In ähnlicher Weise wird bei der in der US 4,310,336 A offenbarten Filtervorrichtung verfahren. Bei dieser Filtervorrichtung werden die Filterschläuche an ihren unteren Enden mit Hilfe eines geteilten Spannrings radial nach außen gegen einen Trennboden gedrückt. In die untere Öffnung des Filterschlauchs ist ein Stutzen eingesetzt, der das Spannband im Inneren des Filterschlauchs übergreift.

Die US 6,726,735 B1 offenbart eine Filtervorrichtung, bei der der Filterkopf keinen Spannring enthält, sondern außenseitig von einem Expander umgriffen wird.

Im Stand der Technik sind auch andere, nicht gattungsgemäße Befestigungsarten für die Befestigung von Filterschläuchen in Trennböden von Filtervorrichtungen bekannt. Bei einer Gattung solcher Lösungen ist der Filterschlauch an seinem oberen offenen Ende um einen Rundschnurring umgeschlagen, so dass der Filterschlauch an diesem Ende einen radial nach außen vorspringenden Wulstrand ausbildet (vgl. EP 0 034 197 B1, DE 25 43 931 A1, DE 78 10 568 U1 und DE 10 2007 034 533 U1). Alternativ dazu ist der obere Rand des Filterschlauchs mit einem Kragen versehen (vgl. EP 0 529 225 B1, EP 1 024 875 B1). Um ein Herausrutschen des Filterschlauchs aus der Öffnung zu vermeiden, ist in die Öffnung des Filterschlauchs von oben ein Stutzen eingesetzt, der teilweise so geformt ist, dass er in dem Filterschlauch unterhalb des Trennbodens eine ringförmige Ausbeulung, also keine Verdickung erzeugt (vgl. EP 0 034 197 B1, DE 25 43 931 A1). Die Stutzen sind teils starr, teils aber auch elastisch (vgl. EP 0 034 197 B1) ausgebildet. Im letzteren Fall ist zusätzlich ein - ebenfalls elastischer - Klemmring in den Stutzen eingesetzt und mit diesem über ein Schwenkgelenk verbunden. Erst dieser Klemmring erzeugt eine radial nach außen gegen den Öffnungsrand der zugehörigen Öffnung gerichtete Spannkraft zur Erzielung der Befestigungs- und Dichtkraft.

Des Weiteren ist eine Befestigungsart bekannt, bei dem an dem oberen offenen Ende des Filterschlauchs kein Befestigungskopf vorgesehen ist. Die Befestigung geschieht durch Einsetzen eines federnden Klemmrings in den Filterschlauch auf Höhe des Trennbodens. Der Klemmring ist so geformt, dass er den Filterschlauch oberhalb und unterhalb des Trennbodens nach außen wölbt (vgl. EP 1 677 894 B1).

Obwohl das Spannband bei den gattungsgemäßen Filtervorrichtungen (DE 22 18 461 B; EP 0 529 225 B1, Figur 1) innerhalb des Befestigungskopfes eingelassen ist und deshalb geschützt liegt, kommt es bei der Filterung bestimmter, aggressiver Rohgase im Betriebsverlauf zu Schädigungen in Form von chemischer oder elektrochemischer Korrosion. Diese beeinträchtigt die Spannkraft des Spannbandes und damit die Abdichtung zwischen Filterschlauch und Trennboden. In dem Umfang, wie sich die Spannkraft verringert, wird zudem die Gefahr größer, dass der Filterschlauch aus der zugehörigen Öffnung herausrutscht. Dies zieht eine sofortige Stilllegung der Filtervorrichtung und umfangreiche Reparaturmaßnahmen nach sich. Dabei muss der betroffene Filterschlauch geborgen, sein Befestigungskopf mit einem neuen Spannband versehen und der Filterschlauch dann wieder montiert werden. Da in einem solchen Fall anzunehmen ist, dass auch die Spannbänder der übrigen Filterschläuche durch Korrosion geschwächt sind, muss die vorbeschriebene Reparatur vorsorglich auch bei diesen Filterschläuchen durchgeführt werden. Ist eine Reparatur nicht mehr möglich, müssen die Filterschläuche durch neue ersetzt werden.

Der Erfindung liegt die Aufgabe zugrunde, eine einfache und kostengünstige Reparatur bei einer gattungsgemäßen Filtervorrichtung oder einem hierfür geeigneten Filterschlauch für den Fall zu ermöglichen, dass die Spannkraft des anfangs eingesetzten Spannbandes seine Spannkraft verliert.

Diese Aufgabe wird erfindungsgemäß durch die Verwendung eines Spannbandes als Ersatzspannband bei einer Filtervorrichtung bzw. einem Filterschlauch gelöst, bei dem in den Befestigungskopf des Filterschlauches auf Höhe der Wulstringe ein sich über deren Umfang erstreckendes, elastisches Hauptspannband eingelassen ist, das eine radial nach außen gegen den Öffnungsrand gerichtete, federnde Spannkraft erzeugt, welche ausreichend ist, allein eine betriebssichere Fixierung des Filterschlauchs in der zugehörigen Öffnung zu erzeugen, wobei das Ersatzspannband in dem zugehörigen Filterschlauch über dessen offenes Ende ohne Demontage des Filterschlauchs eingesetzt und an der Innenseite des Befestigungskopfes angeordnet wird sowie derart ausgebildet ist, dass es eine nach außen gerichtete, federnde Spannkraft bewirkt, welche ausreichend ist, allein eine betriebssichere Fixierung des Filterschlauchs zu erzeugen.

Grundgedanke der Erfindung ist es, mit dem Ersatzspannband bei Nachlassen der Spannkraft des Hauptspannbandes dergestalt eine Reparatur vorzunehmen, dass das Ersatzspannband von oben in den Befestigungskopf eingeschoben wird, während das Hauptspannband einfach in dem Befestigungskopf belassen wird. Dieses Ersatzspannband übernimmt dann die Funktion des ursprünglichen Hauptspannbandes. Dabei ist von Vorteil, dass das nachträglich eingesetzte Ersatzspannband beliebig ausgetauscht werden kann, wenn auch dessen Spannkraft nicht mehr ausreicht, um den Filterschlauch betriebssicher innerhalb der Öffnung des Trennbodens zu halten.

Das Ersatzspannband hat zweckmäßigerweise eine über seinen Umfang und Höhe gleichbleibende Dicke und erstreckt sich zumindest im Bereich des Befestigungskopfes ausschließlich vertikal. Kurz gesagt, besteht das Ersatzspannband im Wesentlichen aus einem elastischen, zu der jeweiligen Form der Öffnung im Trennboden gebogenen Band.

In besonders vorteilhafter Ausbildung hat das Ersatzspannband eine endliche Länge mit zwei Endbereichen, ist also vertikal geschlitzt. Im Gegensatz zu einer endlosen Ausbildung werden hierdurch Toleranzen ausgeglichen. Außerdem besteht die Möglichkeit, das Ersatzspannband um einen in der Regel vorhandenen Stützkorb herumzulegen, so dass es nicht erforderlich ist, den gesamten Stützkorb für die Montage des Spannbandes herauszuziehen. Auf diese Weise wird der Gefahr entgegengewirkt, dass der Filterschlauch in den Rohgasraum abrutscht. Zweckmäßigerweise sollten sich die beiden Endbereiche überlappen, um Spannkraft über den gesamten Umfang des Befestigungskopfes zu erzeugen. Um die Endbereiche gleichwohl miteinander zu verbinden, sollte an dem einen Endbereich ein Einsteckschlitz vorgesehen sein, in den der andere Endbereich eingesteckt ist. Dies kann beispielsweise durch Vorsehen einer Lasche an der Innenseite des Spannbandes geschehen.

In weiterer Ausgestaltung der Erfindung ist vorgesehen, dass am oberen Rand des Ersatzspannbandes wenigstens ein radial nach außen vorstehender Auflagevorsprung vorgesehen ist. Dieser Auflagevorsprung verhindert ein Absinken des Ersatzspannbandes während des Betriebs und dient bei der Montage gleichzeitig als Anschlag für die richtige Positionierung des Ersatzspannbandes gegenüber dem Befestigungskopf. Der Auflagevorsprung kann beispielsweise als umlaufender Auflagekragen ausgebildet sein. Es können aber auch mehrere, separate Auflagevorsprünge vorgesehen sein, die zweckmäßigerweise als über den Umfang des Ersatzspannbandes verteilte Auflagestege ausgebildet sind.

Um das Ersatzspannband leichter einsetzen zu können, sollte an seiner Unterkante eine Durchmesserverringerung in Form beispielsweise einer nach innen gerichteten Rundung oder eines Kegelstumpfs vorgesehen sein.

Für das Ersatzspannband kommt federnder Stahl oder Kunststoff in Frage, wobei der Stahl korrosionsfest sein sollte. Auch mit einer Schutzummantelung versehener Federstahl ist geeignet.

Die Erfindung kann bei einem Verfahren zur Reparatur einer Filtervorrichtung eingesetzt werden, das dadurch gekennzeichnet ist, dass erst bei Nachlassen der Spannkraft des in den Befestigungskopf eingelassenen Hauptspannbandes ein elastisches Ersatzspannband in den betroffenen Filterschlauch in dessen offenes Ende derart eingesetzt wird, dass es an der Innenseite des Befestigungskopfs auf Höhe der Ringwulste zur Anlage kommt, sich über den Innenumfang des Befestigungskopfs erstreckt und dort eine radial nach außen gerichtete Spannkraft bewirkt, und dass ein solches Ersatzspannband verwendet wird, dass es ohne Demontage des Filterschlauchs in diesen einsetzbar ist. Wie schon oben im Einzelnen dargestellt, kann durch Einsetzen des Ersatzspannbandes ein Nachlassen der Spannkraft des in den Befestigungskopf eingelassenen Hauptspannbandes beispielsweise aufgrund von Korrosionseinflüssen kompensiert werden, so dass der Halt des Filterschlauchs in der Öffnung des Trennbodens selbst bei vollständigem Ausfall des ursprünglichen Spannbandes gewährleistet ist.

Vorzugsweise sollte ein Ersatzspannband eingesetzt werden, das eine endliche Länge mit zwei Endbereichen hat, so dass die Möglichkeit besteht, dass das Ersatzspannband um einen in den Filterschlauch eingesetzten Stützkorb herumgelegt wird. Dabei sollte das Ersatzspannband nach Herumlegen um den Stützkorb in Überlappung gebracht werden, d.h. eine solche Länge haben, dass sich die Endbereiche überlappen. Für die Montage des Ersatzspannbandes sollte der Stützkorb um wenigstens die Breite des Ersatzspannbandes aus dem Filterschlauch nach oben herausgezogen, dann das Ersatzspannband um den Stützkorb herumgelegt und auf Höhe des Befestigungskopfes eingesetzt und anschließend der Stützkorb wieder in den Filterschlauch abgesenkt werden.

In der Zeichnung ist die Erfindung anhand eines Ausführungsbeispiels näher veranschaulicht. Es zeigen:
- Figur 1: einen Querschnitt im Bereich einer Öffnung im Trennboden einer erfindungsgemäßen Filtervorrichtung mit eingehängtem Filterschlauch in Teilschnittdarstellung und
- Figur 2: eine Unteransicht des Ersatzspannbandes bei dem Filterschlauch gemäß Figur 1.

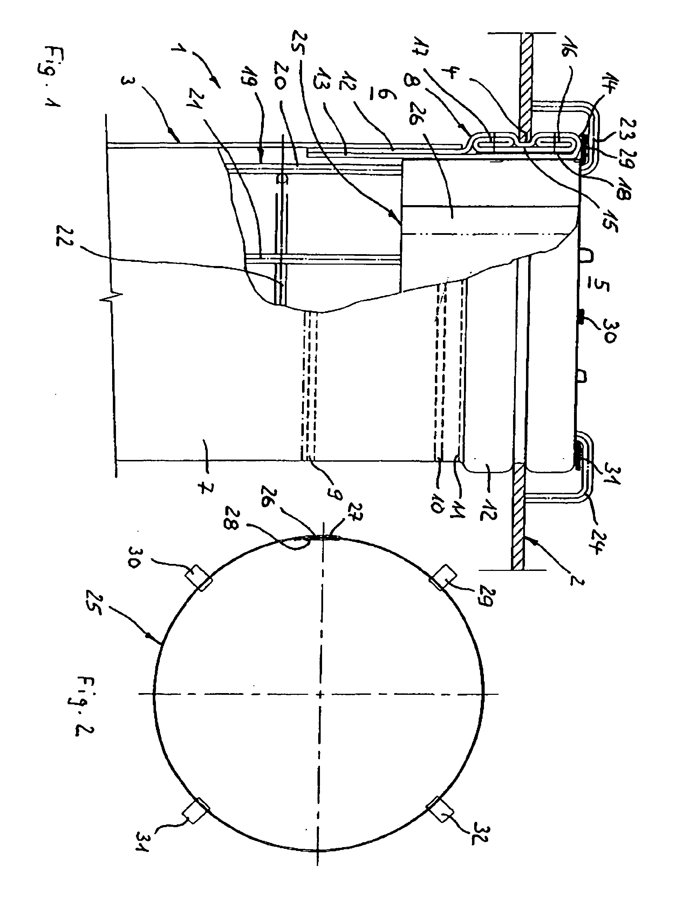

In Figur 1 ist von der Filtervorrichtung 1 lediglich ein sich horizontal erstreckender Trennboden 2 und ein Filterschlauch 3 dargestellt, der in einer kreisrunden, von einem Öffnungsrand 4 begrenzten Öffnung aufgehängt ist. Der Trennboden 2 trennt den Innenraum eines nicht dargestellten Filtergehäuses in einen Reingasraum 5 oberhalb des Trennbodens 2 und einen Rohgasraum 6 unterhalb des Trennbodens 2. Der Rohgasraum 6 hat einen hier nicht dargestellten Einlass für das Rohgas. Der Reingasraum 5 mündet in einen Reingasauslass, der hier ebenfalls nicht dargestellt ist. Im Übrigen sind an dem Trennboden 2 mehrere solcher Filterschläuche nebeneinander und parallel zueinander verlaufend in zugehörigen Öffnungen angeordnet, welche hier nicht dargestellt sind. Sie sind mit dem Filterschlauch 3 in ihrem Aufbau identisch.

Der Filterschlauch 3 weist einen zylindrischen Schlauch-abschnitt 7 auf, von dem hier nur der obere Teil dargestellt ist. Er setzt sich nach unten hin in den Rohgasraum 6 weiter fort. Sein unteres Ende ist geschlossen ausgebildet. Der Schlauchabschnitt 7 besteht aus einem biegeschlaffen, filterwirksamen Material, z.B. einem Nadelfilz. Er wird über den Rohgasraum 6 an seiner Außenseite mit Rohgas beaufschlagt, das den Schlauchabschnitt 7 nach innen durchströmt, wobei Staub zurückgehalten wird. Das so erhaltene Reingas strömt dann in dem Filterschlauch 3 nach oben, tritt über die am oberen Ende vorhandene Öffnung in den Reingasraum 5 aus und verlässt die Filtervorrichtung 1 über den Reingasauslass.

Am oberen Ende des Filterschlauchs 3 ist ein Befestigungskopf 8 vorgesehen, der als separates Teil ausgebildet ist, das in den Schlauchabschnitt 7 hineinragt und dort mit diesem über Nähte 9, 10, 11 verbunden ist. Der Befestigungskopf 8 ist aus zwei Lagen 12, 13 aus Filtermaterial durch Umschlagen um eine obenseitige Umschlagkante 14 gebildet. Oberhalb des Schlauchabschnitts 7 ist zwischen die beiden Lagen 12, 13 ein ringförmiges Wulstband 15 eingelegt, das oberhalb und unterhalb des Trennbodens 2 jeweils zweifach gefaltet ist, so dass zusammen mit der äußeren Lage 12 Verdickungen bildende Wulstringe 16, 17 entstehen, welche zwischen sich den Öffnungsrand 4 des Trennbodens 2 oben- und untenseitig unter Ausbildung einer formschlüssigen Fixierung einfassen, wobei der Öffnungsrand 4 in eine Ringnut zwischen den Wulstringen 16, 17 einfasst.

Zwischen Wulstband 15 und innerer Lage 13 des Befestigungskopfes 8 ist ein Hauptspannband 18 eingeschlossen, das sich über den gesamten Umfang des Befestigungskopfes 8 erstreckt und aus Federstahl besteht. Es ist als einfaches zylindrisches Stahlband gleichbleibender Dicke ausgebildet und derart dimensioniert, dass es über den Umfang des Befestigungskopfes 8 gleichmäßig verteilt eine radial nach außen gerichtete Spannkraft auf das Wulstband 15 und die äußere Lage 12 ausübt und damit den Befestigungskopf 8 gegen den Öffnungsrand 4 presst. Diese Spannkraft ist so bemessen, dass sie ausreichend ist, den Filterschlauch 3 unter den Betriebsbedingungen, für die die Filtervorrichtung 1 ausgelegt ist, sicher an dem Trennboden 2 zu halten, so lange die Spannkraft nicht durch Korrosion wesentlich beeinträchtigt ist.

Damit der Schlauchabschnitt 7 während des Betriebes seine zylindrische Form beibehält, ist in den Filterschlauch 3 ein gitterartiger Stützkorb 19 eingesetzt. Er weist eine Mehrzahl von senkrechten Korbstäben 20, 21 auf, die über den Umfang des Filterschlauchs 3 gleichmäßig verteilt sind und sich bis zum unteren Ende des Filterschlauchs 3 erstrecken. In regelmäßigen Abständen sind die Korbstäbe 20, 21 durch horizontale Korbringe 22 miteinander verbunden, so dass der Stützkorb 19 ein im Wesentlichen starres Gebilde darstellt. Die Korbstäbe 20, 21 ragen aus der oberen Öffnung des Befestigungskopfes 8 hinaus und bilden dort U-förmig nach unten umgebogene Auflagehaken 23, 24 aus, deren untere Enden sich auf der Oberseite des Trennbodens 2 abstützen. Der Stützkorb 19 ist auf diese Weise unabhängig von dem Filterschlauch 3 an dem Trennboden 2 aufgehängt.

An der Innenseite des Befestigungskopfes 8 liegt ein Ersatzspannband 25 an, das sich über den gesamten Umfang des Befestigungskopfes 8 erstreckt und- wie das Hauptspannband 18- aus Federstahl besteht. Auch das Ersatzspannband 25 ist als einfaches Stahlband ausgebildet. Es erstreckt sich von der Umschlagkante 14 bis in den Schlauchabschnitt 7 hinein, ist also wesentlich breiter bzw. höher als das Hauptspannband 18. Es ist in Figur 1 nicht geschnitten dargestellt, d.h. von dem Ersatzspannband 25 ist innerhalb des Schnittes durch den Filterschlauch 3 die Außenseite des Ersatzspannbandes 25 zu sehen.

In Figur 2 ist das Ersatzspannband 25 in einer Unteransicht dargestellt, die gegenüber der Darstellung gemäß Figur 1 um 45° entgegen dem Uhrzeigersinn verdreht ist. Es ist zu sehen, dass das Ersatzspannband 25 Zylinderform hat. Es hat eine endliche Länge mit sich überlappenden Endbereichen 26, 27. An der Innenseite des Ersatzspannbandes 25 ist im Bereich des Endbereichs 26 an dessen Innenseite eine Lasche 28 angebracht, die zwischen sich und dem äußeren Endbereich 26 einen Schlitz ausbildet, der sich senkrecht über die Breite (Höhe) des Ersatzspannbandes 25 erstreckt und den inneren Endbereich 27 aufnimmt. Der Endbereich 27 ist also in den von Endbereich 26 und Lasche 28 gebildeten Schlitz eingesteckt. An der Oberkante des Ersatzspannbandes 25 ragen radial nach außen vorspringende Auflagestege 29, 30, 31, 32 heraus, die auf der Umschlagkante 14 des Befestigungskopfes 8 aufliegen und auf diese Weise das Ersatzspannband 25 daran hindern, in den Filterschlauch 3 hineinzurutschen.

Das Ersatzspannband 25 wird erst dann in dem Filterschlauch 3 eingesetzt, wenn das Hauptspannband 18 in Folge von Korrosion geschwächt ist und damit nicht mehr eine Spannkraft entwickelt, die ausreichend ist, um den Filterschlauch 3 unter Betriebsbedingungen zuverlässig an dem Trennboden 2 zu halten. Für die erst dann vorgesehene Montage des Ersatzspannbandes 25 wird der Stützkorb 19 von Hand um zumindest die Breite (Höhe) des Ersatzspannbandes 25 nach oben aus dem Filterschlauch 3 herausgehoben. Um den herausgehobenen Abschnitt des Stützkorbes 19 wird anschließend das zunächst flache Ersatzspannband 25 herumgebogen und dann der innere Endbereich 27 in den vom äußeren Endbereich 26 und der Lasche 28 gebildeten Schlitz eingeschoben. Dann wird das Ersatzspannband 25 in Anlage an die Innenseite des Befestigungskopfes 8 auf Höhe der Wulstringe 16, 17 gebracht und soweit abgesenkt, bis die Auflagestege 29, 30, 31 an der Umschlagkante 14 des Befestigungskopfes 8 aufliegen. Schließlich wird der Stützkorb 19 in die in Figur 1 gezeigten Positionen abgesenkt, bis sich die Auflagehaken 23, 24 wieder an der Oberseite des Trennbodens 2 abstützen.

Das Ersatzspannband 25 ist so dimensioniert, dass es im Bereich des Trennbodens 2 eine radial nach außen gerichtete Spannkraft entwickelt, die im Wesentlichen derjenigen des Hauptspannbandes 18 im Anfangszustand entspricht. Das Ersatzspannband 25 übernimmt also die Funktion des Hauptspannbandes 18, wenn das Hauptspannband 18 wegen Nachlassens der Spannkraft hierzu nicht mehr in der Lage ist, und sorgt so für die Aufrechterhaltung bzw. Verlängerung der Funktionalität der Befestigung des Filterschlauchs 3 am Trennboden 2.

## Patentansprüche

1. Verwendung eines Spannbandes als Ersatzspannband (25) für den Einsatz in Filtervorrichtungen (1) mit einem dessen Innenraum in einen Reingasraum (5) und einen Rohgasraum (6) unterteilenden Trennboden (2), der zumindest eine einen Öffnungsrand (4) ausbildende Öffnung aufweist, in die jeweils ein Filterschlauch (3) eingesetzt ist, der einen Befestigungskopf (8) an dessen oberem offenen Ende aufweist, welcher außenseitig zwei radial vorstehende Verdickungen in Form von Wulstringen (16, 17) mit davon eingeschlossener Ringnut ausbildet, in die der Öffnungsrand (4) der zugehörigen Öffnung einfasst, wobei in dem Befestigungskopf (8) auf Höhe der Wulstringe (16, 17) ein sich über deren Umfang erstreckendes, elastisches Hauptspannband (18) eingelassen ist, das eine radial nach außen gegen den Öffnungsrand (4) gerichtete, federnde Spannkraft erzeugt, welche ausreichend ist, allein eine betriebssichere Fixierung des Filterschlauchs (3) in der zugehörigen Öffnung zu erzeugen, oder für den Einsatz in einem Filterschlauch (3) für eine vorgenannte Filtervorrichtung (1), wobei das Ersatzspannband (25) in dem zugehörigen Filterschlauch (3) über dessen offenes Ende ohne Demontage des Filterschlauchs (3) eingesetzt und an der Innenseite des Befestigungskopfes (8) angeordnet wird sowie derart ausgebildet ist, dass es eine nach außen gerichtete, federnde Spannkraft bewirkt, welche ausreichend ist, allein eine betriebssichere Fixierung des Filterschlauchs (3) zu erzeugen.

2. Verwendung nach Anspruch 1, **dadurch gekennzeichnet, dass** das Ersatzspannband (25) eine über seinen Umfang und Höhe gleichbleibende Dicke hat und sich zumindest im Bereich des Befestigungskopfes (8) ausschließlich vertikal erstreckt.

3. Verwendung nach Anspruch 1 oder 2, **dadurch gekennzeichnet, dass** das Ersatzspannband (25) eine endliche Länge mit zwei Endbereichen (26, 27) hat, die sich vorzugsweise überlappen, insbesondere wobei an dem einen Endbereich (26) ein Einsteckschlitz vorgesehen ist, in den der andere Endbereich (27) eingesteckt ist, und zweckmäßigerweise wobei eine Lasche (28) vorzugsweise an der Innenseite des Spannbandes (25) zur Ausbildung des Einsteckschlitzes angebracht ist.

4. Verwendung nach einem der Ansprüche 1 bis 3, **dadurch gekennzeichnet, dass** das Ersatzspannband (25) eine Höhe hat, die mindestens so groß ist wie die des Befestigungskopfes (8).

5. Verwendung nach einem der Ansprüche 1 bis 4, **dadurch gekennzeichnet, dass** bei dem Ersatzspannband (25) am oberen Rand wenigstens ein nach außen vorstehender Auflagevorsprung (29 bis 32) vorgesehen ist, der insbesondere als Auflagekragen ausgebildet ist, oder dass mehrere Auflagevorsprünge vorgesehen sind, die als über den Umfang des Ersatzspannbandes (25) verteilte Auflagestege (29 bis 32) ausgebildet sind.

6. Verwendung nach einem der Ansprüche 1 bis 5, **dadurch gekennzeichnet, dass** das Ersatzspannband (25) an seiner Unterkante eine Durchmesserverringerung aufweist.

7. Verwendung nach einem der Ansprüche 1 bis 6, **dadurch gekennzeichnet, dass** das Ersatzspannband (25) aus federndem Stahl oder Kunststoff besteht, insbesondere aus nichtrostendem Stahl.

8. Verfahren zur Reparatur einer Filtervorrichtung (1) mit einem dessen Innenraum in einen Reingasraum (5) und einen Rohgasraum (6) unterteilenden Trennboden (2), der zumindest eine einen Öffnungsrand (4) ausbildende Öffnung aufweist, in die jeweils ein Filterschlauch (3) eingesetzt ist, der einen Befestigungskopf (8) an dessen oberem offenen Ende aufweist, welcher außenseitig zwei radial vorstehende Wulstringe (16, 17) mit davon eingeschlossener Ringnut ausbildet, in die der Öffnungsrand (4) der zugehörigen Öffnung einfasst, wobei in dem Befestigungskopf (8) ein sich über dessen Umfang erstreckendes, elastisches Hauptspannband (18) eingelassen ist, das eine radial nach außen gegen den Öffnungsrad (4) gerichtete Spannkraft erzeugt, welche allein ausreichend ist, eine betriebssichere Fixierung des Filterschlauchs (3) in der zugehörigen Öffnung zu erzeugen, **dadurch gekennzeichnet, dass** bei Nachlassen der Spannkraft des Hauptspannbandes (18) ein elastisches Ersatzspannband (25) in den betroffenen Filterschlauch (3) über dessen offenes Ende derart eingesetzt wird, dass es an der Innenseite des Befestigungskopfes (8) auf Höhe der Wulstringe (16, 17) zur Anlage kommt, sich über den Innenumfang des Befestigungskopfes (8) erstreckt und dort eine radial nach außen gerichtete Spannkraft bewirkt, welche allein ausreichend ist, eine betriebssichere Fixierung des Filterschlauchs (3) in der zugehörigen Öffnung zu erzeugen und dass ein solches Ersatzspannband (25) verwendet wird, dass es ohne Demontage des Filterschlauchs (3) in diesen einsetzbar ist.

9. Verfahren nach Anspruch 8 **dadurch gekennzeichnet, dass** das Ersatzspannband (25) um einen in den Filterschlauch (3) eingesetzten Stützkorb (19) herumgelegt wird und dabei vorzugsweise in Überlappung gebracht wird, wobei insbesondere der Stützkorb (19) um wenigstens die Breite des Ersatzspannbandes (25) aus dem Filterschlauch (3) nach oben herausgezogen, dann das Ersatzspannband (25) um den Stützkorb (19) herumgelegt und auf Höhe des Befestigungskopfes (8) eingesetzt wird und dass anschließend der Stützkorb (19) wieder in den Filterschlauch (3) abgesenkt wird.

## Claims

1. The use of a clamping band as a substitute clamping band (25) for use in filter devices (1) comprising a separating floor (2) sub-dividing the interior of the latter into a clean gas space (5) and a crude gas space (6), that has at least one opening forming an opening edge (4) into which is respectively inserted a filter tube (3) that has a fastening head (8) on its upper open end which forms on the outside two radially projecting thickenings in the form of bead rings (16, 17) with an annular groove enclosed by the latter into which the opening edge (4) of the corresponding opening engages, there being inserted in the fastening head (8), at the height of the bead rings (16, 17), an elastic main clamping band (18) extending over the periphery of said bead rings which generates a resilient clamping force directed radially outwards against the opening edge (4) which alone is sufficient to generate reliable fixing of the filter tube (3) in the corresponding opening, or for use in a filter tube (3) for an aforementioned filter device (1), the substitute clamping band (25) being inserted in the corresponding filter tube (3) via its open end without dismantling the filter tube (3) and being disposed on the inside of the fastening head (8) and being designed such that it gives rise to an outwardly directed, resilient clamping force which alone is sufficient to generate reliable fixing of the filter tube (3).

2. The use according to Claim 1, **characterised in that** the substitute clamping band (25) has a thickness which remains the same over its periphery and its height and extends exclusively vertically at least in the region of the fastening head (8).

3. The use according to Claim 1 or 2, **characterised in that** the substitute clamping band (25) has a finite length with two end regions (26, 27) which preferably overlap, in particular there being provided in one end region (26) an insertion slot into which the other end region (27) is inserted, and advantageously a strap (28) preferably being attached to the inside of the clamping band (25) so as to form the insertion slot.

4. The use according to any of Claims 1 to 3, **characterised in that** the substitute clamping band (25) has a height which is at least as great as that of the fastening head (8).

5. The use according to any of Claims 1 to 4, **characterised in that** there is provided for the substitute clamping band (25) on the upper edge at least one outwardly projecting support projection (29 to 32) which is in particular in the form of a support flange, or that a number of support projections are provided which are in the form of support bars (29 to 32) distributed over the periphery of the substitute clamping band (25).

6. The use according to any of Claims 1 to 5, **characterised in that** the substitute clamping band (25) has a diameter reduction on its lower edge.

7. The use according to any of Claims 1 to 6, **characterised in that** the substitute clamping band (25) is made of resilient steel or plastic, in particular of rust-resistant steel.

8. A method of repairing a filter device (1) comprising a separating floor (2) sub-dividing the interior of the latter into a clean gas space (5) and a crude gas space (6), that has at least one opening forming an opening edge (4) into which is respectively inserted a filter tube (3) which has a fastening head (8) on its upper open end which forms on the outside two radially projecting bead rings (16, 17) with an annular groove enclosed by the latter into which the opening edge (4) of the corresponding opening engages, there being inserted in the fastening head (8) an elastic main clamping band (18) extending over its periphery which generates a clamping force directed radially outwards against the opening edge (4) and which alone is sufficient to generate reliable fixing of the filter tube (3) in the corresponding opening, **characterised in that** when the clamping force of the main clamping band (18) is reduced, an elastic substitute clamping band (25) is inserted into the respective filter tube (3) via its open end such that it comes to rest against the inside of the fastening head (8) at the height of the bead rings (16, 17), extends over the inner periphery of the fastening head (8) and brings about a radially outwardly directed clamping force here which alone is sufficient to generate reliable fixing of the filter tube (3) in the corresponding opening and that a substitute clamping band (25) which can be inserted into the filter tube (3) without dismantling the latter can be used.

9. The method according to Claim 8, **characterised in that** the substitute clamping band (25) is placed around a supporting cage (19) inserted into the filter tube (3) and is thereby preferably overlapped, in particular the supporting cage (19) being drawn upwards out of the filter tube (3) by at least the width of the substitute clamping band (25), the substitute clamping band (25) is then placed around the supporting cage (19) and inserted at the height of the fastening head (8), and that then the supporting cage (19) is lowered again into the filter tube (3).

## Revendications

1. Utilisation d'une bande de serrage comme bande de serrage de rechange (25) pour une application dans des dispositifs de filtrage (1) dont l'espace intérieur est scindé en un espace pour gaz purifié (5) et un espace pour gaz brut (6) par un fond séparateur (2) qui est doté d'au moins une ouverture formant un rebord d'ouverture (4) et contenant un tube de filtrage (3) dont l'extrémité ouverte supérieure présente une tête de fixation (8), laquelle forme, de son côté extérieur, deux callosités qui saillissent de façon radiale sous la forme de bagues à rebords (16, 17) et dans l'enclave desquelles se trouve une rainure à anneau dans laquelle s'enchâsse le rebord (4) de l'ouverture correspondante, pour lequel est admise, dans la tête de fixation (8) et à la hauteur des bagues à rebord (16, 17), une bande de serrage élastique principale (18) qui s'étend sur la circonférence de celles-ci et qui engendre une force de tension flexible et radiale dirigée vers l'extérieur contre le rebord (4) et laquelle est suffisante pour engendrer à elle seule une fixation fiable du tube de filtrage (3) dans l'ouverture correspondante, ou encore pour l'application dans un tube de filtrage (3) pour un dit dispositif de filtrage (1), pour lequel la bande de serrage (25) est placée dans le tube de filtrage (3) correspondant par son extrémité ouverte sans qu'il y ait besoin de démonter le tube de filtrage (3) puis disposée sur le côté intérieur de la tête de fixation (8), ainsi que formée de façon à engendrer une force de tension flexible dirigée vers l'extérieur, laquelle est suffisante pour engendrer à elle seule une fixation fiable du tube de filtrage (3).

2. Utilisation selon la revendication 1, **caractérisée en ce que** la bande de serrage de rechange (25) garde la même épaisseur sur toute sa portée et hauteur puis s'étend exclusivement à la verticale au moins dans la zone de la tête de fixation (8).

3. Utilisation selon les revendications 1 ou 2, **caractérisée en ce que** la bande de serrage de rechange (25) est dotée d'une longueur finie avec deux extrémités (26, 27) qui, préférablement, se chevauchent, plus particulièrement pour laquelle une des extrémités (26) est pourvue d'un port dans lequel l'autre extrémité (27) est branchée, et pour laquelle, de façon pratique, une bride (28) est rattachée au côté intérieur de la bande de serrage (25) afin de former un port de raccordement.

4. Utilisation selon l'une des revendications 1 à 3, **caractérisée en ce que** la bande de serrage de rechange (25) a une hauteur qui égalise au moins celle de la tête de fixation (8).

5. Utilisation selon l'une des revendications 1 à 4, **caractérisée en ce que** près de la bande de serrage de rechange (25) se trouve au moins un épaulement de support (29 à 32), plus particulièrement formé comme un col de support, ou que plusieurs épaulements de supports sont présents et formés comme des passerelles de support (29 à 32) distribués sur la portée de la bande de serrage de rechange (25).

6. Utilisation selon l'une des revendications 1 à 5, **caractérisée en ce que** la bande de serrage de rechange (25) présente une réduction de son diamètre sur son rebord inférieur.

7. Utilisation selon l'une des revendications 1 à 6, caractérisée ce que la bande de serrage de rechange (25) est composée d'acier élastique ou de plastique, plus particulièrement d'acier inoxydable.

8. Procédé de réparation d'un dispositif de filtrage (1) dont l'espace intérieur est scindé en un espace pour gaz purifié (5) et un espace pour gaz brut (6) par un fond séparateur (2) qui est doté d'au moins une ouverture formant un rebord d'ouverture (4) et contenant un tube de filtrage (3) dont l'extrémité ouverte supérieure présente une tête de fixation (8), laquelle forme, de son côté extérieur, deux bagues à rebords (16, 17) dans l'enclave desquelles se trouve une rainure à anneau dans laquelle s'enchâsse le rebord (4) de l'ouverture correspondante, pour lequel est admise, dans la tête de fixation (8) et à la hauteur des bagues à rebord (16, 17), une bande de serrage élastique principale (18) qui s'étend sur la circonférence de celles-ci et qui engendre une force de tension flexible et radiale dirigée vers l'extérieur contre le rebord (4) et laquelle est suffisante pour engendrer à elle seule une fixation fiable du tube de filtrage (3) dans l'ouverture correspondante, **caractérisé en ce que**, lors du desserrement de la force de tension de la bande de serrage principale (18), une bande de serrage de rechange élastique (25) est insérée dans le tube de filtrage concerné (3) par son extrémité ouverte de façon à ce qu' il vienne se poser contre le côté intérieur de la tête de fixation (8) à la hauteur des bagues à rebord (16, 17), s'étende sur la circonférence intérieure de la tête de fixation (8) et exerce là une force de tension dirigée radialement vers l'extérieur, laquelle suffit pour assurer à elle seule la fixation fiable du tube de filtrage (3) dans l'ouverture correspondante, et qu'une telle bande de serrage de rechange (25) est utilisée de façon à ce qu'elle puisse être installée dans le tube de filtrage (3) sans que ce dernier n'ait à être démonté.

9. Procédé selon la revendication 8, **caractérisé en ce que** la bande de serrage de rechange (25) est posée autour d'une cage de support (19) installée dans un tube de filtrage (3) ou préférablement amenée en chevauchement, où plus particulièrement la cage de support (19) est retirée du tube de filtrage (3) de par au moins la largeur de la bande de serrage de rechange (25), puis la bande de serrage de rechange (25) est posée autour de la cage de support (19) et installée à la hauteur de la tête de fixation (8) avant que, finalement, la cage de support (19) ne soit rabaissée dans la tube de filtrage (3).
